# EUROPEAN PATENT APPLICATION

(11) **EP 2 913 827 A1**
(43) Date of publication of application: **02.09.2015**
(21) Application number: 15156236.0
(22) Date of filing: 24.02.2015
(51) Int. Cl.: H01B 1/08, H01B 1/20, C09C 1/36

(54) **FINE POWDER OF TRANSPARENT AND ELECTRIC CONDUCTIVE OXIDE COMPOSITES AND PRODUCTION METHOD THEREOF AND TRANSPARENT ELECTRIC CONDUCTIVE FILM**

(30) Priority: 26.02.2014 JP 2014035645
(71) Applicant: Titan Kogyo Kabushiki Kaisha, Ube-shi Yamaguchi 755-8567 (JP)
(72) Inventor: Inoue, Yasuo, Ube-shi Yamaguchi 755-8567 (JP); Nagaoka, Shigeru, Ube-shi Yamaguchi 755-8567 (JP); Mazaki, Misao, Ube-shi Yamaguchi755-8567 (JP); Kondoh, Hiromasa, Ube-shi Yamaguchi 755-8567 (JP); Yoshioka, Eisuke, Ube-shi Yamaguchi 755-8567 (JP)
(74) Representative: Hart-Davis, Jason

(57) **Abstract**

Fine powder of transparent conductive oxide composites is obtained by covering a surface of a rod-like rutile-type titanium oxide particle having a long axis diameter of 0.05 µm or higher and 0.15 µm or lower, a short axis diameter of 0.01 µm or higher and lower than 0.03 µm, and an axis ratio of 5 or higher, with a doped tin oxide using a wet method, wherein antimony is doped at 10 to 25 wt% as Sb against SnO₂, at 1 to 2 wt%/m² per a specific surface area of the substrate; and firing the substrate under an oxidizing atmosphere at a firing temperature of 400 to 700°C.

## Description

The present invention relates to a fine powder of transparent and electric conductive oxide composites (herein referred as "transparent conductive oxide composites") that has excellent electric conductivity and dispersibility, and provides excellent transparency as well as ultraviolet shielding property and infrared shielding property when incorporated into a transparent resin film, a production method thereof, and a liquid dispersion and a transparent and electric conductive film (herein referred as "transparent conductive film") that incorporate said fine powder of transparent conductive oxide composites.

Conductive oxide composites are used widely as a charge control material in printers, charge rollers for copying machines, photosensitive drums, toner carriers, and antistatic brushes, etc. In addition, conductive oxide composites that have high transparency when dispersed in resin, etc., are used in dust prevention films for displays, electromagnetic shielding film, dye-sensitized solar cell, internal electrode or transparent conductive film for liquid crystal displays, plasma displays, etc. Among those oxides, indium-doped tin oxide (ITO) and antimony-doped tin oxide (ATO) are effective in shielding near infrared radiation, and are recently used in films to stick onto windowpanes of cars and houses from an energy saving viewpoint as materials to effectively take in visible light and shield near infrared radiation.

The conventional, so-called independent type antimony-doped tin oxide (ATO), which does not use a substrate, is known to have excellent conductivity, and to exhibit transparency as well as infrared shielding property when incorporated into a transparent resin. A transparent film incorporating dispersed powders of a heat wave shielding material, such as ATO powders and ITO powders, is presented as a technology for shielding infrared radiation using ATO that increases the near infrared radiation absorption at a wave range of 900 nm to 1200 nm and exhibits an excellent heat wave shielding effect (Patent Document 1). However, the use of antimony makes the material susceptible to sintering during the firing step in the production of oxide composites, which leads to grain formation when the material is incorporated into transparent resin to form a film and spoils the appearance as well as worsen haze. Hence, it becomes necessary to perform wet grinding and elutriation (wet classification) in subsequent steps to remove granules. A study has also been made of a liquid dispersion in which a surface-modified ATO powder or ITO powder, whose surface is treated with an organic substance to improve dispersibility in resins, is dispersed in glycol (Patent Document 2). However, the ATO powder and ITO powder has good infrared shielding effect, but no ultraviolet shielding property.

Meanwhile, a method is presented for producing a conductive powder composed of an inorganic powder coated on the surface with ATO comprising coprecipitating a tin hydrate containing an antimony hydrate in an aqueous suspension of inorganic powder, and then heating/firing the product (Patent Document 3). The present applicant has demonstrated that when titanium dioxide is used as a substrate and the substrate surface is covered with a sodium-containing antimony-doped tin oxide, it forms a white conductive powder (Patent Document 4). However, such powder has low visible light transmission and low transparency. Various transparent powders exist, but none simultaneously possesses infrared shielding property, ultraviolet shielding property and transparency.

Hence, the present inventors thought that particles that maintain high transparency when incorporated into transparent resin, and exhibit not only excellent infrared shielding property, but also ultraviolet shielding property at the same time, would provide a more human-friendly transparent resin film, and laid eyes on particles of a substrate having an ultraviolet shielding property coated with ATO.
[Patent Document 1] Japanese Patent Publication No. 2008-297414
[Patent Document 2] Japanese Patent Publication No. 2010-155938
[Patent Document 3] Japanese Patent Publication No. H05-294632
[Patent Document 4] Japanese Patent No. 3421148

ATO, which is widely used today, has excellent electric conductivity and infrared shielding property, but it does not possess any ultraviolet shielding property. The object of the present invention is to provide a transparent conductive film that possesses all the properties of excellent dispersibility in resin, excellent transparency, high ultraviolet shielding property and infrared shielding property, a liquid dispersion for producing said transparent conductive film and a fine powder of transparent conductive oxide composites.

The present inventors studied an electric conductive fine powder composed of a fine powder of titanium oxide shaped specifically to provide ultraviolet absorption coated with antimony-doped tin oxide, and found surprisingly that a fine powder of conductive oxide composites can be obtained which is less susceptible to sintering than ATO alone and enables easy uniform dispersion, thereby improving transparency of the powder dispersed in resin, and which maintains the ultraviolet absorption of the substrate. Further, the present inventors found that a fine powder of transparent conductive oxide composites comprising a substrate of titanium oxide coated with an antimony-doped tin oxide can be obtained by precipitating a tin oxide containing antimony on the surface (hereinafter referred to as "antimony-doped tin oxide") on the surface of the substrate shaped specifically as mentioned above, and firing the product in an oxidizing atmosphere.

The present invention provides a fine powder of transparent conductive oxide composites comprising rod-like rutile-type titanium oxide particles, wherein each rutile-type titanium oxide particle has a long axis diameter of 0.05 µm or higher and 0.15 µm or lower, a short axis diameter of 0.01 µm or higher and lower than 0.03 µm, and an axis ratio of 5 or higher, coated on a surface with an antimony-doped tin oxide, the fine powder of transparent conductive oxide composites having a volume resistance of 100 Ω· cm or lower and a specific surface area of 40 m²/g or higher and 70 m²/g or lower. The rutile-type titanium oxide used as the substrate has good reactivity with antimony-doped tin oxide (ATO). In addition, a rod-like rutile-type titanium oxide particle having a long axis diameter of 0.05 µm or higher and 0.15 µm or lower, a short axis diameter of 0.01 µm or higher and lower than 0.03 µm, and an axis ratio of 5 or higher possesses an aspect that is advantageous for forming a conductive path, and such particle can provide excellent conductivity. Further, the use of a rod-like rutile-type titanium oxide particle of a small particle size as a substrate provides good dispersibility against the dispersion medium, such as transparent resin.

Further, the present invention provides a liquid dispersion formed by dispersing the fine powder of transparent conductive composites in a transparent-resin-containing dispersion medium at a ratio of 50 to 80 wt%. The transparent thin film having a film thickness of 2 to 6 µm obtained by curing the liquid dispersion forms a transparent conductive thin film that has a visible light transmission of 85% or higher, a haze of 3% or lower and a surface resistance of 1×10¹⁰ Ω/□ or lower, and that has ultraviolet shielding property as well as infrared shielding property.

Further, the present invention provides a method for producing a fine powder of transparent conductive oxide composites comprising steps of coating a surface of a rod-like rutile-type titanium oxide particle having a long axis diameter of 0.05 µm or higher and 0.15 µm or lower, a short axis diameter of 0.01 µm or higher and lower than 0.03 µm, and an axis ratio of 5 or higher, with a doped tin oxide by using a wet method, wherein antimony is doped at 10 to 25 wt% as Sb against SnO₂, at 1 to 2 wt%/m² per specific surface area of the rutile-type titanium oxide particle; and firing the rutile-type titanium oxide particle under an oxidizing atmosphere at a firing temperature of 400 to 700°C.

The fine powder of transparent conductive oxide composites of the present invention exhibits a high ultraviolet shielding property and infrared shielding property when incorporated into a transparent resin, and it can also disperse uniformly in the transparent resin as well as maintain transparency of the transparent resin.

Figure 1 is a transmission electron microscope photography of the fine powder of conductive oxide composites obtained in Example 1.

Figure 2 is a transmittance curve measured using an ultraviolet/visible/near infrared radiation photometer of a film formed of the liquid dispersion composed of a transparent resin dispersion medium incorporating a conductive powder obtained in the Examples and Comparative Examples.

Described in detail below is the fine powder of transparent conductive oxide composites of the present invention comprising rod-like rutile-type titanium oxide particles coated on the surface with antimony-doped tin oxide.

### <Production Method>

The fine powder of transparent conductive oxide composites of the present invention uses a rod-like rutile-type titanium oxide particle that has a long axis diameter of 0.05 µm or higher and 0.15 µm or lower, a short axis diameter of 0.01 µm or higher and lower than 0.03 µm, and an axis ratio of 5 or higher as the substrate. The use of a rod-like substrate of a small particle size provides good dispersibility and allows high transparency to be obtained while maintaining conductivity. It is not preferable to use a rutile-type titanium oxide particle having a short axis diameter that is higher than 0.03 µm as the substrate, since it leads to low transparency. Further, a short axis diameter of 0.01 µm or higher and lower than 0.03 µm, and an axis ratio of 5 or lower also decreases transparency, since the particles become susceptible to aggregation, and the secondary particle size becomes large.

The rod-like rutile-type titanium oxide particles used as the substrate in the present invention can be obtained, for example, by a production method disclosed as Comparative Example 2 in Japanese Patent No. 4018770. In other words, rod-like titanium oxide particles can be obtained by adding hydrochloric acid to orthotitanate, which can be obtained by alkali neutralization of titanyl sulfate or titanium tetrachloride solution, and adjusting the product to a TiO₂ concentration of 80 to 140 g/L, preferably 90 to 110 g/L, a hydrochloric acid concentration of 90 to 150 g/L, preferably 105 to 135 g/L, and performing a synthesis reaction at the boiling point.

The fine powder of transparent conductive oxide composites of the present invention can be produced by adding a solution containing antimony and tin to a substrate powder suspension composed of rod-like rutile-type titanium oxide particles dispersed in pure water to induce precipitation of an antimony-containing tin hydroxide on the substrate surface, and firing the product under an oxidizing atmosphere.

It is preferable to heat the substrate powder suspension to 60 to 80°C before adding the solution containing antimony and tin. An overly low temperature is not preferable since it slows the precipitation speed of antimony and tin when they are added, and enlarges the difference in their settling speed, so that the conducting layer composition becomes ununiform, thereby making uniform coating difficult.

The antimony-containing tin hydroxide can be obtained by a known hydrolysis method, and it can be obtained by dissolving an antimony compound in a solution of tin salt or stannic acid salt, and adding alkali or acid at the same time. The reaction should be performed at a pH range of 2 to 12, or preferably a pH range of 2 to 5.

Examples of tin salt may include tin chloride, tin sulfate, tin nitrate, etc. Also, examples of stannic acid salt include sodium stannate, potassium stannate, etc.

Examples of antimony compounds may include antimony chloride, antimony halide and a sulfate salt of antimony, etc.

Examples of alkali may include sodium hydroxide, potassium hydroxide, sodium carbonate, potassium carbonate, ammonium carbonate, ammonia water, ammonia gas, etc., and examples of acid include hydrochloric acid, sulfuric acid, nitric acid, acetic acid, etc.

The amount of solution containing tin and antimony to be added to the substrate powder suspension can be set based on the specific surface area of the substrate, based on an assumption that the antimony-containing tin hydroxide generated by hydrolysis covers the entire surface of the substrate powder.

The fine powder of transparent conductive oxide composites of the present invention should preferably contain tin oxide of 1 to 2 wt%/m² per the specific surface area of the substrate. In other words, when the specific surface area of the substrate is 100 m²/g, the amount of tin oxide against 1 g of substrate is in a range of 100×1×0.01=1 g to 100×1×0.02=2g. When the content of tin oxide is lower than 1 wt%/m², the conductivity would not be sufficiently expressed, and the substrate would not be sufficiently coated, and an excellent infrared shielding property will not be obtained. A content of tin oxide that is higher than 2 wt%/m² is not desirable, since tin oxide that is free from the substrate surface tends to appear, promoting sintering in the firing step, and spoiling the coating property.

The antimony-doped tin oxide to be coated on the substrate in the fine powder of transparent conductive oxide composites of the present invention should preferably have antimony doped at 10 to 25 wt% as Sb against SnO₂. A dope amount of antimony that is lower than 10 wt% makes it difficult to obtain a good infrared shielding property, and an amount that is over 25 wt% does not lead to an infrared shielding property that differs much from an amount at 25 wt%, but promotes sintering and decreases transparency, so such amounts are not preferable.

The firing process can be performed under an oxidizing atmosphere, for example an air atmosphere, at a firing temperature of 300 to 700°C, preferably 500 to 600°C, more preferably 525 to 575°C. A grinding process can be performed after firing, as necessary. A particle size after grinding, that is, the secondary particle size at the time of dispersion, of 1/2 or lower against the light wave length would generally provide transparency. In other words, the lower limit of the visible light region is 0.40 µm, and a secondary particle size of 0.20 µm or lower would lead to low scattering in the visible light range so that good transparency can be obtained when transparent resin is incorporated.

### <Surface Treatment with Organic Materials>

The fine powder of transparent conductive oxide composites can be surface treated with a silane coupling agent or an organic material to improve dispersibility in resin. The surface treatment with the organic material is preferably a coating treatment with a coupling agent or an organic compound, such as multivalent alcohol, without being limited thereby. The type of coupling agent used in the surface treatment can be selected as necessary according to the purpose of use of the fine powder of transparent conductive oxide composites, and one or more types selected from a group consisting of the silane type, the titanate type, the zirconate type, the aluminate type and the zircoaluminate type. The silane type coupling agent may include vinyltriethoxysilane, 3-aminopropyltriethoxysilane, 3- mercaptopropyltriethoxysilane, methacryloxypropyltrimethoxysilane. In addition, the titanate type coupling agent may include isopropyltri(N-aminoethyl-aminoethyl)titanate, and a zirconate type coupling agent may include zirconium tributoxystearate, and an aluminate type coupling agent may include acetoalkoxyaluminumdiisopropylate. Further, a multivalent alcohol for use in surface treatment can be selected as necessary, for example, from trimethylolethane, trimethylolpropane, pentaerythritol, mannitol, sorbitol and the mixture thereof.

The surface treatment with an organic material may include a method of dry processing in a high-speed agitator/mixer, such as a Henschel mixer, or a method of forming a suspension by dispersing said fine powder of transparent conductive oxide composites in an organic solvent or water, then adding an organic material in the suspension for processing. The latter processing in the suspension is suitable for uniformly processing the surface with the organic material, but a distillation operation, grinding, etc. will be necessary for an organic solvent, and a solid-liquid separation, drying and grinding, etc. will be necessary for water. Hence, the method using a high speed agitator/mixer, such as a Henschel mixer, is preferable from the viewpoint of ease of production and cost.

### <Liquid Dispersion>

The present invention also provides a liquid dispersion obtained by dispersing the above fine powder of transparent conductive oxide composites in a dispersion medium. A transparent conductive film can be produced by curing the liquid dispersion of the present invention to form a film.

A curable-resin-containing solution formed by dissolving a curable resin into a solvent can be preferably used as a dispersion medium. The curable resin and solvent can be selected according to the transparent conductive film to be produced, but a transparent resin is preferable for effective use of the features of the fine powder of transparent conductive oxide composites of the present invention.

Preferable resins may include acrylic resin, polyethylene resin, polypropylene resin, polyethylene terephthalate resin, vinyl chloride resin, polystyrene resin, polyamide resin, phenol resin, melamine resin, epoxy resin and mixtures thereof.

Preferable solvents may include xylene, toluene, ethanol, methanol, isopropylalcohol, acetone, methyl ethyl ketone and mixtures thereof.

### <Transparent Conductive Film>

Further, the present invention provides a transparent conductive film obtained by curing the liquid dispersion to form a film.

The fine powder of transparent conductive oxide composites of the present invention can be incorporated in paint, ink, emulsion, fiber, or transparent resin to produce conductive paint, conductive ink, conductive emulsion, and conductive fiber. Further, a resin paint containing the fine powder of transparent conductive oxide composites can be created using a sand grinder, etc.. The resin paint can be applied on a substrate to provide conductivity or anti-static property to the substrate, for use as a coating. The coating component should preferably be a thermosetting resin or an ultraviolet radiation setting resin. The concentration of the fine powder of transparent conductive oxide composites to be incorporated may be any suitably adjusted according to the desired conductivity, but a preferable concentration range is 60 to 80 wt% against the coating component. When the amount of fine powder of transparent conductive oxide composites to be incorporated is too small, the desired surface resistance cannot be obtained, and when the amount is too large, the strength of the coating will decrease and the cost will increase further, so such amounts are not preferable.

A transparent thin film having a film thickness of 2 µm, containing the fine powder of transparent conductive oxide composites of the present invention at 60 to 80 wt% against the coating component has good transparency and conductivity, indicated by all light transmission of 85% or higher, a haze of 3% or lower and a surface resistance of 1×10¹⁰ Ω/□ or lower. Further, the transparent conductive film incorporating the fine powder of transparent conductive oxide composites of the present invention has a high ultraviolet shielding property and infrared shielding property.

The present invention is explained more specifically below by the Examples. The Examples are only exemplification, and they do not limit the range of the invention.

### [Example 1]

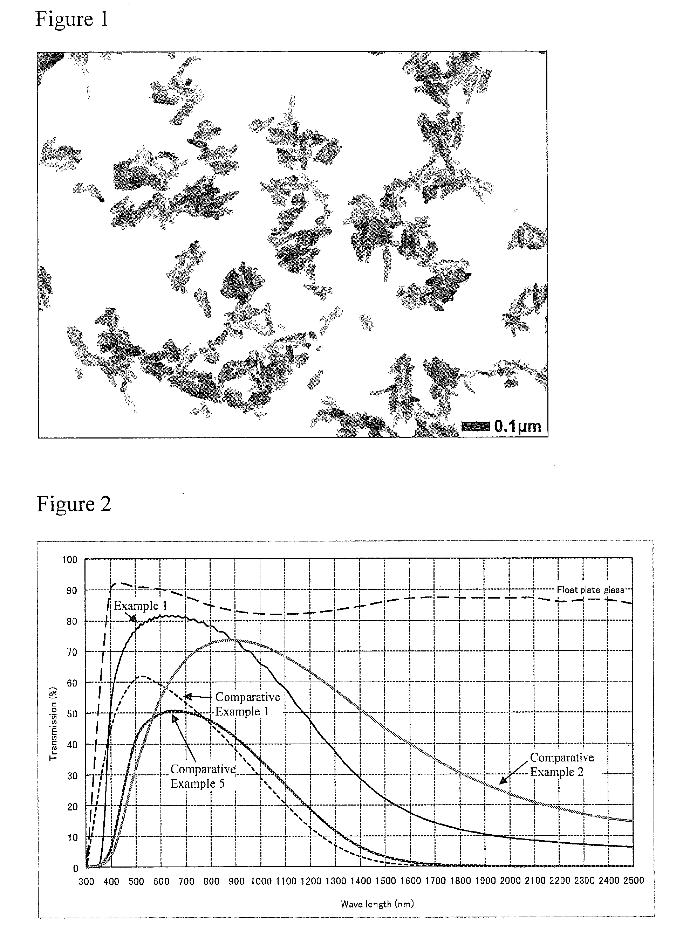

A powder of rod-like rutile-type titanium oxide (1500 g) having a long axis diameter of 0.10 µm and a short axis diameter of 0.01 µm, an axis ratio of 10.0, and a specific surface area of 150 m²/g was dispersed in 40 L of pure water using a homomixer produced by Tokushukika to form a substrate powder suspension, and the substrate powder suspension was heated to and maintained at 70°C. Stannic chloride (5833 g) and 1030 g of antimony trichloride were dissolved in hydrochloric acid, and pure water was added to adjust the hydrochloric acid concentration to 1.9 N. Further, 200g/L of sodium hydroxide was prepared. The hydrochloric acid solution of stannic chloride and antimony trichloride was added together with the sodium hydroxide solution to the substrate powder suspension over a stretch of 11 hours, then the pH was adjusted to 2.5. Subsequently, the mixture was agitated/maintained for 30 minutes and aged. The suspension was subjected to decantation washing using an ion exchange water until the conductivity of the filtrate was 100 µS/cm or lower, then it was filtered. The remaining solid was dried at 110°C for 20 hours, and fired in an electric furnace at 575°C and ground. The obtained fine powder is a fine powder of conductive oxide composites of an antimony-doped tin oxide on a substrate of titanium oxide. Tin oxide SnO₂ is incorporated at 1.5 wt%/m² (SnO₂/TiO₂) per the specific surface area of titanium oxide TiO₂, and the amount of doped antimony Sb/SnO₂ was 15 wt%. A photograph of transmission electron microscope of the obtained fine particle of conductive oxide composites is shown in Figure 1. The obtained fine particle is a rod-like particle having a long axis diameter of 0.11 µm and a short axis diameter of 0.02 µm. The shape of the rutile-type titanium oxide particles that were used and the physical property of the obtained fine powder of conductive oxide composites are shown in Table 1.

The obtained fine powder of the conductive oxide composites was added to xylene-toluene mixture with the transparent acrylic resin ACRYDIC A-168 (resin fraction 5 wt%) of Dai Nippon Toryo, and it was subjected to bead dispersion using a Dispermat to formulate a liquid dispersion. Two types of liquid dispersions with dispersion times of 2 hours and 3 hours were formulated. The liquid dispersion of 2 hours dispersion time was coated on a PET film using a doctor blade and dried for 1 hour by wind, then the surface resistance, all light transmittance and haze of the obtained thin film were measured. The liquid dispersion of 3 hours dispersion time was deposited on a glass pane using a doctor blade and dried for 1 hour by wind, and then the transmittance curve of the obtained thin film was measured. The surface resistance, all light transmittance and haze of the obtained thin film are shown in Table 2, and the transmittance curve is shown in Figure 2.

### [Example 2]

A process similar to Example 1, except for setting the amount of antimony trichloride to 1580 g, was performed to obtain a fine powder, liquid dispersion and thin film. The obtained fine powder is a fine powder of conductive oxide composites of an antimony-doped tin oxide on a substrate of titanium oxide. Tin oxide SnO₂ was incorporated at 1.5 wt%/m² (SnO₂/TiO₂) per the specific surface area of titanium oxide TiO₂, and the amount of doped antimony Sb/SnO₂ was 25 wt%, and the rod-like particle had a long axis diameter of 0.11 µm and a short axis diameter of 0.02 µm.

The shape of the rutile-type titanium oxide particles that were used and the physical property of the obtained fine powder of conductive oxide composites are shown in Table 1, and the surface resistance, all light transmittance and haze of the obtained thin film are shown in Table 2.

### [Example 3]

A process similar to Example 1, except for setting the amount of stannic chloride to 7778 g and the amount of antimony trichloride to 2107g, was performed to obtain a fine powder and liquid dispersion. The obtained fine powder is a fine powder of conductive oxide composites of an antimony-doped tin oxide on a substrate of titanium oxide. Tin oxide SnO₂ was incorporated at 2.0 wt%/m² (SnO₂/TiO₂) per the surface/volume ratio of titanium oxide TiO₂, and the amount of doped antimony Sb/SnO₂ was 25 wt%, and the rod-like particle had a long axis diameter of 0.11 µm and a short axis diameter of 0.02 µm.

The shape of the rutile-type titanium oxide particles that were used and the physical property of the obtained fine powder of conductive oxide composites are shown in Table 1, and the surface resistance, all light transmittance and haze of the obtained thin film are shown in Table 2.

### [Comparative Example 1]

A process similar to Example 2, except for not using a substrate, was performed to obtain a fine powder, liquid dispersion and thin film. The obtained fine powder is an ATO conductive fine powder in which the amount of doped antimony Sb/SnO₂ is 25 wt%, and it was a spheroidal particle having a particle size of 0.01 µm.

The shape of the rutile-type titanium oxide particles that were used and the physical property of the obtained fine powder are shown in Table 1, and the surface resistance, all light transmittance and haze of the obtained thin film are shown in Table 2.

### [Comparative Example 2]

A powder of anatase-type titanium oxide (4000 g) having a particle size of 0.06 µm and an axis ratio of 1.0, and a specific surface area of 71 m²/g was dispersed in 30 L of pure water using a homomixer produced by Tokushukika to form a substrate powder suspension, and the substrate powder suspension was heated to and maintained at 70°C. Stannic chloride (8988 g) and 1279 g of antimony trichloride were dissolved in hydrochloric acid, and pure water was added to adjust the hydrochloric acid concentration to 2.0 N. Further, 25% ammonium water was prepared. The hydrochloric acid solution of stannic chloride and antimony trichloride, and ammonium water, were added together to the substrate powder suspension over a stretch of 7 hours, then the pH was adjusted to 7 to 8. The suspension was washed until the conductivity of the filtrate was 100 µS/cm or lower, then it was filtered. The remaining solid was dried at 150°C for 20 hours, then fired in an electric furnace of 550°C and ground. The obtained fine powder is a fine powder of conductive oxide composites of an antimony-doped tin oxide on a substrate of titanium oxide. Tin oxide SnO₂ is incorporated at 1.3 wt%/m² (SnO₂/TiO₂) per the specific surface area of titanium oxide TiO₂, and the amount of doped antimony Sb/SnO₂ was 13 wt%. The powder is a spheroidal particle having a particle size of 0.07 µm.

A liquid dispersion and thin film were formulated similar to Example 1 using the obtained fine powder.

The shape of the anatase-type titanium oxide particles that were used and the physical property of the obtained fine powder are shown in Table 1, and the surface resistance, all light transmittance and haze of the obtained thin film are shown in Table 2, and the transmittance curve is shown in Figure 2.

### [Comparative Example 3]

A process similar to Example 2, except for using a powder of rutile-type titanium oxide having a long axis diameter of 0.08 µm, a short axis diameter of 0.03 µm, an axis ratio of 2.7 and a specific surface area of 213 m²/g, was performed to obtain a fine powder and liquid dispersion and a thin film.

The obtained fine powder is a fine powder of conductive oxide composites of an antimony-doped tin oxide on a substrate of titanium oxide. Tin oxide SnO₂ was incorporated at 1.5 wt%/m² (SnO₂/TiO₂) per the specific surface area of titanium oxide TiO₂, and the amount of doped antimony Sb/SnO₂ was 25 wt%, and the rod-like particle had a long axis diameter of 0.09 µm and a short axis diameter of 0.05 µm.

The shape of the rutile-type titanium oxide particles that were used and the physical property of the obtained fine powder are shown in Table 1, and the surface resistance, all light transmittance and haze of the obtained thin film are shown in Table 2.

### [Comparative Example 4]

A process similar to Example 2, except for using a powder of rutile-type titanium oxide having a long axis diameter of 0.25 µm, a short axis diameter of 0.06 µm, an axis ratio of 4.2 and a specific surface area of 79 m²/g, was performed to obtain a fine powder and a liquid dispersion and a thin film.

The obtained fine powder is a fine powder of conductive oxide composites of an antimony-doped tin oxide on a substrate of titanium oxide. Tin oxide SnO₂ was incorporated at 1.5 wt%/m² (SnO₂/TiO₂) per the specific surface area of titanium oxide TiO₂, and the amount of doped antimony Sb/SnO₂ was 25 wt%, and the rod-like particle had a long axis diameter of 0.27 µm and a short axis diameter of 0.07 µm.

The shape of the rutile-type titanium oxide particles that were used and the physical property of the obtained fine powder are shown in Table 1, and the surface resistance, all light transmittance and haze of the obtained thin film are shown in Table 2.

### [Comparative Example 5]

A powder of rod-like rutile-type titanium oxide having a long axis diameter of 0.10 µm, a short axis diameter of 0.01 µm, an axis ratio of 10.0 and a specific surface area of 150 m²/g was mixed/ground together using an Ishikawa raikai mixer with an ATO conductive fine powder that does not use a substrate obtained in Comparative Example 1. The obtained powder was a mixture of a rod-like rutile-type titanium oxide having a long axis diameter of 0.10 µm, a short axis diameter of 0.01 µm and a spheroidal ATO conductive fine powder of 0.01 µm.

A liquid dispersion and a thin film were formulated similar to Example 1 using the obtained mixed powder.

The shape of the rutile-type titanium oxide particles that were used and the physical property of the obtained fine powder are shown in Table 1, and the surface resistance, all light transmittance and haze of the obtained thin film are shown in Table 2, and the transmittance curve is shown in Figure 2.

The shape of the substrate particle, the volume resistance and the specific surface area of the powder, and the all light transmittance, surface resistance and haze of the thin film were measured by the following methods.

### <Particle Shape of Substrate and Measurement Method thereof>

The shape of the substrate particle was obtained by measuring the long axis length, short axis length and the axis ratio (long axis length/short axis length) of the individual particles for 50 particles or more using a photograph of the transmission electron microscope and averaging the results.

### <Volume Resistance and Measurement Method thereof>

The LCR meter AR-480D produced by Keisei was connected to measure the resistance. The thickness of the sample was measured and the volume resistance was calculated.

### <Measurement Method of Specific Surface Area>

The sample was subjected to a deaeration process in nitrogen at 150°C for 30 minutes, then a specific surface area was measured using a single point BET method in the Gemini 2360 model by Micrometrics Co.

### <Measurement Method of Surface Resistance>

The surface resistance of a thin film with a film thickness of 2 µm was measured using a Surface Resistance Measurement Device HP 4339 A by Yokokawa Hewlett-Packard Co.

### <Measurement of All Light Transmittance and Haze>

All light transmittance and haze of a thin film with a film thickness of 2 µm were measured using a direct-reading haze computer spectrophotometer HGM-2DP by Suga Test Instruments, Co. Ltd.

### <Measurement Method of Transmittance Curve>

The transmittance curve in the range of 300 to 2500 nm of a thin film with a film thickness of 6 µm was obtained using ultraviolet/visible/near infrared spectrophotometer V-670 by JASCO Co.

As shown in Tables 1 and 2, poor transparency results from a large short axis diameter or an axis ratio of 5 or lower, even if the surface resistance is at an equivalent level. In contrast, Examples 1 to 3 using rod-like rutile-type titanium oxide particles having a long axis diameter of 0.05 µm or higher and 0.15 µm or lower, a short axis diameter of 0.01 µm or higher and lower than 0.03 µm, and an axis ratio of 5 or higher exhibit a substantially high transparency.

From Table 2 and Figure 2, it can be seen that the thin film obtained in Example 1 has an all light transmittance of 85% or higher, a haze below 3.0%, an extremely high transparency against the substrate float glass, and possesses an ultraviolet shielding property and an infrared shielding property. In comparison to Example 1, Comparative Example 1 has poor ultraviolet shielding property, low visible light transmission, or transparency, and poor dispersibility. Comparative Example 2 possesses ultraviolet shielding property, but the visible light transmission, or transparency, is low, and the infrared shielding property is poor. Comparative Example 5 possesses an ultraviolet shielding property and infrared shielding property, but the visible light transmission, or transparency, is extremely low, and good dispersibility cannot be obtained just by mixing the sample.

**[Table 1]**

| | Substrate Particle Shape | | | Substrate specific surface area (m²/g) | SnO₂/TiO₂ (wt%/m²) | Sb/SnO₂ (wt %) | volume resistance (Ω·cm) | Specific surface area (m²/g) |
|---|---|---|---|---|---|---|---|---|
| | Long axis (µm) | Short axis (µm) | Axis ratio (-) | | | | | |
| Example 1 | 0.10 | 0.01 | 10.0 | 150 | 1.5 | 15 | 5.2 | 47 |
| Example 2 | 0.10 | 0.01 | 10.0 | 150 | 1.5 | 25 | 1.7 | 46 |
| Example 3 | 0.10 | 0.01 | 10.0 | 150 | 2.0 | 25 | 0.9 | 55 |
| Comparative Example 1 | - | - | - | - | - | 25 | 1.5 | 108 |
| Comparative Example 2 | 0.06 | 0.06 | 1.0 | 71 | 1.8 | 13 | 32.1 | 44 |
| Comparative Example 3 | 0.08 | 0.03 | 2.7 | 213 | 1.5 | 25 | 1.5 | 59 |
| Comparative Example 4 | 0.25 | 0.06 | 4.2 | 79 | 1.5 | 25 | 1.1 | 29 |
| Comparative Example 5 | 0.10 | 0.01 | 10.0 | 150 | 1.5 | 25 | - | - |

**[Table 2]**

| | Surface resistance (Ω/□) | All light transmission (%) | Haze (%) |
|---|---|---|---|
| Example 1 | 1.4E+05 | 91.2 | 1.3 |
| Example 2 | 2.9E+05 | 93.4 | 1.1 |
| Example 3 | 1.8E+05 | 91.3 | 1.3 |
| Comparative Example 1 | 7.7E+05 | 79.7 | 3.0 |
| Comparative Example 2 | 4.6E+06 | 70.2 | 11.0 |
| Comparative Example 3 | 5.6E+05 | 80.7 | 5.7 |
| Comparative Example 4 | 1.9E+05 | 56.8 | 8.3 |
| Comparative Example 5 | 1.5E+07 | 68.1 | 2.3 |

## Claims

1. A fine powder of transparent conductive oxide composites comprising rod-like rutile-type titanium oxide particles, wherein each rutile-type titanium oxide particle has a long axis diameter of 0.05 µm or higher and 0.15 µm or lower, a short axis diameter of 0.01 µm or higher and lower than 0.03 µm, and an axis ratio of 5 or higher and a surface of each rutile-type titanium oxide particle is coated with an antimony-doped tin oxide, the fine powder of transparent conductive oxide composites having a volume resistance of 100 Ω·cm or lower and a specific surface area of 40 m²/g or higher and 70 m²/g or lower.

2. The fine powder of transparent conductive composites according to Claim 1, wherein the antimony-doped tin oxide is a tin oxide in which antimony is doped at 10 to 25 wt% as Sb against SnO₂.

3. A liquid dispersion formed by dispersing fine powder of transparent conductive composites according to Claim 1 in a transparent-resin-containing dispersion medium at a ratio of 50 to 80 wt%.

4. A transparent conductive film containing fine powder of transparent conductive composites obtained by curing a liquid dispersion according to Claim 3.

5. The transparent conductive film according to Claim 4, wherein the transparent conductive film has a visible light transmission of 85% or higher, a haze of 3% or lower and a surface resistance of 1×10¹⁰ Ω/□ or lower at a film thickness of 2 µm.

6. The transparent conductive film according to Claim 4 or 5, wherein the transparent conductive film has an ultraviolet shielding property and an infrared shielding property at a film thickness of 2 to 6 µm.

7. A method for producing a fine powder of transparent conductive oxide composites comprising steps of
coating a surface of a rod-like rutile-type titanium oxide particle having a long axis diameter of 0.05 µm or higher and 0.15 µm or lower, a short axis diameter of 0.01 µm or higher and lower than 0.03 µm, and an axis ratio of 5 or higher, with a doped tin oxide using a wet method, wherein antimony is doped at 10 to 25 wt% as Sb against SnO₂, at 1 to 2 wt%/m² per a specific surface area of the rutile-type titanium oxide particle; and
firing the rutile-type titanium oxide particle under an oxidizing atmosphere at a firing temperature of 400 to 700°C.
